# FASCICULE DE BREVET EUROPEEN

(11) **EP 0 601 903 B1**
(45) Date de publication et mention de la délivrance du brevet: **29.01.1997**
(21) Numéro de dépôt: 93402769.9
(22) Date de dépôt: 16.11.1993
(51) Int. Cl.: B23K 33/00, B23K 31/02, B23K 15/00, B23K 26/00

(54) **Procédé de fabrication d'une structure mécano soudée, structure obtenue et son application à la réalisation d'un noeud d'une structure en treillis**
Verfahren zum Herstellen einer geschweissten Struktur, hergestellte Struktur sowie ihre Anwendung zum Herstellen von Knotenpunkt einer Gitterstruktur
Welding structure manufacturing, method, manufactured structure and use to manufacture a node of a lattice-shaped structure

(30) Priorité: 17.11.1992 FR 9213792
(43) Date de publication de la demande: 15.06.1994
(73) Titulaire: GIAT INDUSTRIES, 78000 Versailles (FR)
(72) Inventeur: Chambefort, Jean-Claude, F-42000 Saint Etienne (FR); Hubsch, Alain, F-38200 Vienne (FR); Vengeon, Bernard, F-42580 l'Etrat (FR); Lipnick, Michel, F-42650 Saint Jean Bonnefonds (FR); Tachon, Daniel, F-42340 Veauche (FR)
(74) Mandataire: Célanie, Christian

(56) Documents cités:
- EP-A- 0 426 950
- WO-A-90/07392
- DE-A- 4 023 393
- DE-A- 4 041 123
- PATENT ABSTRACTS OF JAPAN vol. 010, no. 189 (M-494) 3 Juillet 1986 & JP-A-61 033 765 (MITSUI ENG & SHIPBUILD CO LTD) 17 Février 1986

## Description

L'invention est relative à la fabrication de structures mécanosoudées ayant la forme d'un polyèdre.

Les structures mécanosoudées polyédriques sont fabriquées en découpant des pièces dans les tôles, en usinant le bord des pièces, en assemblant les pièces, en les maintenant assemblées sous la forme d'une structure polyédrique à l'aide d'un outillage conçu spécialement pour chaque type structure à réaliser et en soudant les arêtes de la structure par exemple à l'arc.

Cette technique présente des inconvénients : il faut réaliser un outillage adapté pour le maintien des pièces assemblées et le soudage induit des contraintes importantes qui peuvent nuire à la stabilité dimensionnelle de la structure.

Le manque de stabilité dimensionnelle est un inconvénient grave lorsque les structures mécanosoudées sont des sous-ensembles de structures beaucoup plus important pour lesquelles on recherche une très grande stabilité dimensionnelle d'ensemble. C'est le cas par exemple lorsque les structures mécanosoudées constituent les noeuds d'un treillis destiné à être le berceau support d'un instrument d'une grande précision tel qu'un télescope.

Le brevet DE-A-4 023 393 décrit la fabrication d'un montant pour véhicule automobile destiné à supporter la vitre. C'est une structure mécanosoudée comprenant deux plaques pliées chacune suivant une forme particulière et assemblées entre elles suivant deux bords. Au niveau d'un bord des moyens d'emboîtement sont prévus, mais l'autre bord nécessite un maintien par deux outils très spécifiques. De plus, la structure ne constitue pas à proprement parler une structure polyédrique. Ce document ne décrit pas des emboîtements sur les parties des pièces à assembler, l'emboîtement avant soudure pour constituer un assemblage ayant la forme du polyèdre (sans utiliser un outillage spécifique), le soudage suivant les arêtes de l'assemblage.

Le document japonais JP-A-61-33765 peut illustrer le préambule de la revendication 1, à l'exception du fait que les pièces ne sont pas soudées entre elles en position d'assemblage. En effet, ce document japonais décrit vraisemblablement un réservoir réalisé par soudage à partir de plaques hexagonales et pentagonales. A cette fin, on découpe les plaques et on construit la structure en soudant les plaques une à une et les unes aux autres.

Le but de la présente invention est de remédier à ces inconvénients en proposant un procédé de fabrication d'un structure mécanosoudée qui permette de dispenser d'outillage spécifique pour le maintien des pièces assemblées pendant le soudage et qui conduise à une structure mécanosoudée ayant une très bonne stabilité dimensionnelle.

A cet effet, l'invention a pour objet un procédé de fabrication d'une structure mécanosoudée ayant la forme d'un polyèdre, constituée par des pièces, en tôle métallique, assemblées entre elles et dont une partie au moins constitue des faces du polyèdre soudées suivant des bords mis en coïncidence deux à deux, constituant des arêtes du polyèdre, consistant à découper les pièces dans au moins une tôle métallique et à souder les pièces entre elles en position d'assemblage, caractérisé en ce que :
- on réalise, au cours du découpage des pièces, des moyens d'emboîtement complémentaires sur des parties des pièces destinées à être assemblées entre elles deux à deux,
- on place les pièces dans une position d'assemblage et les moyens d'emboîtement complémentaires dans une disposition d'engagement mutuel, de manière à constituer un assemblage ayant la forme du polyèdre qui est maintenu assemblé par lesdits moyens complémentaires, et
- on soude les pièces entre elles suivant des arêtes de l'assemblage ayant la forme du polyèdre.

De préférence, on réalise, par découpage d'une tôle métallique, au moins une pièce constituant une entretoise comportant des moyens d'emboîtement complémentaires de moyens d'emboîtement de pièces de la structure et on place l'entretoise entre au moins deux pièces de la structure et les moyens d'emboîtement de l'entretoise dans une disposition d'engagement avec des moyens d'emboîtement des deux pièces, lorsqu'on constitue l'assemblage en forme de polyèdre.

Généralement, il n'est pas nécessaire de réaliser une jonction par soudage entre l'entretoise et les pièces entre lesquelles est placée l'entretoise.

Les moyens d'emboîtement peuvent être notamment des tenons et des mortaises ou des créneaux.

On peut découper la tôle métallique dans une direction inclinée par rapport à une direction perpendiculaire aux faces de la tôle, pour obtenir des chanfreins inclinés sur une partie au moins des bords des pièces.

De préférence, les pièces sont découpées au laser ou au jet d'eau.

De préférence également, les pièces sont soudées au laser ou par faisceau d'électrons.

L'invention concerne également une structure mécanosoudée ayant la forme d'un polyèdre comportant des pièces en tôle métallique dont une partie au moins constitue des faces du polyèdre assemblées entre elles et soudées suivant des bords constituant des arêtes du polyèdre, caractérisée en ce qu'elle comporte des moyens d'emboîtement complémentaires sur des parties de raccordement des pièces, dans une disposition d'engagement mutuel, pour maintenir la structure assemblée avant le soudage desdits bords, les moyens d'emboîtement complémentaires étant réalisés par découpage sur les parties des pièces destinées à être assemblées entre elles deux à deux.

La structure mécanosoudée peut comporter de plus au moins une entretoise en tôle métallique intercalée entre au moins deux pièces et présentant des moyens d'emboîtement complémentaires des deux pièces. Cette entretoise peut être utilisée en outre comme élément servant à rigidifier la structure.

L'invention concerne enfin un noeud pour structure métallique en treillis constitué d'une structure mécanosoudée polyèdrique selon l'invention.

L'invention va maintenant être décrite plus en détail en regard des figures annexées dans lesquelles :
- la figure 1 est une vue en perpective avec arrachement d'un noeud d'une structure métallique en treillis constitué d'une structure mécanosoudée polyèdrique selon l'invention,
- la figure 2 est une vue en perspective schématique avec arrachement d'une zone d'arête d'une structure suivant l'invention comportant des moyens d'emboîtement constitués par des créneaux.

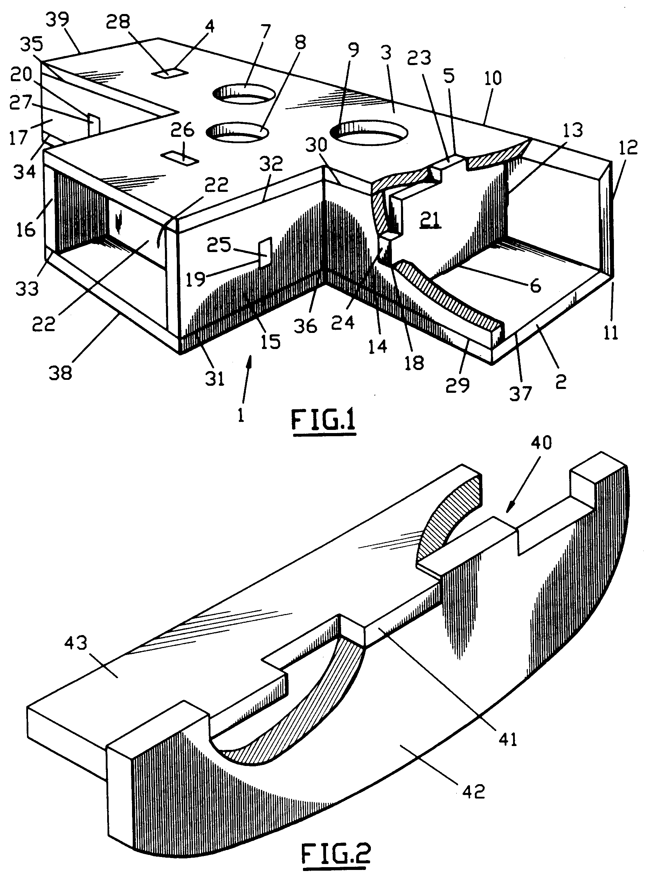

Le noeud de la structure métallique repéré généralement par 1 à la figure 1 est une structure polyèdrique mécanosoudée constituée de :
- deux flasques 2 et 3 identiques en forme de T percés de trous rectangulaires ou mortaises 4, 5, 6 et de trous 7, 8, 9 pouvant être circulaires, elliptiques ou polygonaux, un bord 10 du flasque 3 et un bord 11 du flasque 2 comportant un chanfrein ;
- un flasque rectangulaire 12 de longueur égale à la longueur de l'arête la plus longue 10 du flasque 3 et percé de deux mortaises 13 (une seule visible sur la figure 1) ;
- quatre flasques rectangulaires 14, 15, 16, 17 percés de mortaises 18, 19, 20 (trois seulement sont visibles sur la figure 1) ;
- trois entretoises 21, 22 (deux seulement sont visibles sur la figure 1) de forme rectangulaire et munies sur chacun de leurs côtés d'un tenon 23, 24, 25, 26, 27, 28 (six seulement sont visibles sur la figure 1).

Les flasques sont obtenus par découpage d'une tôle en acier d'épaisseur voulue. Les chanfreins des flasques 2 et 3 sont obtenus par découpage de la tôle dans une direction inclinée par rapport à la perpendiculaire aux faces de la tôle, suivant les bords 10 et 11 correspondants.

Les flasques sont assemblés de telle façon que les tenons 23, 24, 25, 26, 27, 28 des entretoises 21, 22 s'emboîtent dans les mortaises 4, 5, 6, 13, 18, 19, 20 des flasques 2, 3, 12, 14, 15, 17.

Par assemblage des flasques et des entretoises, on réalise une structure polyédrique qui est maintenue assemblée par les tenons et mortaises. On peut donc effectuer le soudage de la structure sans utiliser d'outillage de maintien.

Les flasques sont soudés entre eux le long de leurs lignes de contact 10, 11, 29, 30, 31, 32, 33, 34, 35, 36, de préférence par un procédé de soudage à haute énergie sans métal d'apport.

Le noeud ainsi constitué, lorsqu'il est intégré à une structure métallique est soudé par ses extrémités rectangulaires (ou carrées) 37, 38, 39 à des poutres principales ou membrures de section rectangulaire (ou carrée) et des poutres secondaires de section circulaire sont emmanchées et soudées dans les trous 7, 8, 9.

De préférence, pour fabriquer ce noeud :
- on découpe au laser les différentes pièces (flasques et entretoises) ; on obtient ainsi une coupe extrêmement précise ;
- on assemble les pièces en emboîtant les tenons dans les mortaises ; la qualité de la coupe est telle que l'emboîtement conduit à une structure rigide ayant une très bonne précision géométrique et qui tient assemblée sans l'intervention d'un outillage spécialisé ;
- on soude au laser les flasques entre eux ; le soudage au laser ne créant pas d'échauffement notable des flasques, ne crée pas de tensions dans la structure qui ainsi a une excellente stabilité dimensionnelle.

A la place de tenons et de mortaises, on peut utiliser également, comme représenté sur la figure 2, des créneaux 40, 41 usinés sur les bords des pièces constituant les faces du polyèdre. Les créneaux 40 et 41 sont découpés le long des bords de deux flasques 42, 43 qui peuvent ainsi être emboîtés l'un dans l'autre, le long des bords des flasques qui forment entre eux un angle à 90°.

En découpant les tenons et les mortaises ou les créneaux avec des coupes biaises on peut faire des assemblages dans lesquels les angles entre deux flasques contigus sont différents de 90°.

Cette technique permet de réaliser toute structure mécanosoudée polyédrique.

Pour mettre en oeuvre ce procédé, on peut utiliser des installations de découpe et de soudage au laser robotisées munies d'ordinateurs de commande.

On peut alors dessiner la structure et les pièces qui la composent à l'aide d'un dispositif de conception assistée par ordinateur qui fournit automatiquement des programmes de découpe et de soudage. Les programmes sont introduits dans des ordinateurs de commande des installations de découpe et de soudage par laser.

On peut également découper les flasques au jet d'eau ou par tout moyen permettant d'obtenir une découpe très précise.

On peut réaliser le soudage en utilisant un faisceau d'électrons ou tout faisceau à haute énergie permettant de souder sans échauffement notable des pièces soudées.

A noter que les flasques servant d'entretoises peuvent être disposés dans des endroits particulièrement choisis pour qu'ils servent de raidisseurs à la structure polyédrique. Ces entretoises peuvent soit être soudées soit ne pas être soudées aux flasques dans lesquels elles sont emboîtées.

## Revendications

1. Procédé de fabrication d'une structure mécanosoudée (1) ayant la forme d'un polyèdre, constituée par des pièces (2, 3, 12, 14, 15, 16, 17, 21, 22, 42, 43), en tôle métallique, assemblées entre elles et dont une partie au moins constitue des faces du polyèdre soudées suivant des bords (10, 11, 29, 30, 31, 32, 33, 34, 35, 36) mis en coïncidence deux à deux, constituant des arêtes du polyèdre, consistant à découper les pièces dans au moins une tôle métallique et à souder les pièces entre elles en position d'assemblage, caractérisé en ce que :
- on réalise, au cours du découpage des pièces, des moyens d'emboîtement complémentaires (4, 5, 6, 13, 18, 19, 20, 23, 24, 25, 26, 27, 28, 40, 41) sur des parties des pièces destinées à être assemblées entre elles deux à deux,
- on place les pièces dans une position d'assemblage et les moyens d'emboîtement complémentaires dans une disposition d'engagement mutuel, de manière à constituer un assemblage ayant la forme du polyèdre qui est maintenu assemblé par lesdits moyens complémentaires, et
- on soude les pièces entre elles suivant des arêtes de l'assemblage ayant la forme du polyèdre.

2. Procédé de fabrication suivant la revendication 1, caractérisé en ce qu'on réalise, par découpage d'une tôle métallique, une pièce constituant au moins une entretoise (21, 22) comportant des moyens d'emboîtement (23, 24, 25, 26, 27, 28) complémentaires de moyens d'emboîtement (4, 5, 6, 13, 18, 19, 20) de pièces de la structure et qu'on place l'entretoise entre au moins deux pièces de la structure et les moyens d'emboîtement de l'entretoise dans une disposition d'engagement avec des moyens d'emboîtement des deux pièces, lorsqu'on constitue l'assemblage en forme de polyèdre.

3. Procédé de fabrication suivant la revendication 2, caractérisé par le fait qu'on ne réalise aucune jonction par soudage entre l'entretoise (21, 22) et les pièces entre lesquelles est placée l'entretoise.

4. Procédé selon l'une quelconque des revendications 1, 2 et 3, caractérisé en ce que les moyens d'emboîtement (4, 5, 6, 13, 18, 19, 20, 23, 24, 25, 26, 27, 28, 40, 41) appartiennent à l'un au moins des types de moyens d'emboîtement suivants : tenons et mortaises, créneaux.

5. Procédé selon l'une des revendications 1 à 4, caractérisé en ce qu'on découpe la tôle métallique dans une direction inclinée par rapport à une direction perpendiculaire aux faces de la tôle pour obtenir des chanfreins inclinés sur une partie au moins des bords (10, 11) des pièces.

6. Procédé selon l'une quelconque des revendications 1 à 5, caractérisé en ce que les pièces sont découpées par l'un des procédés suivants : découpage au laser, découpage au jet d'eau.

7. Procédé selon l'une quelconque des revendications 1 à 6, caractérisé en ce que les pièces sont soudées par l'un des procédés suivants : soudage au laser, soudage par faisceau d'électrons.

8. Procédé selon l'une quelconque des revendications 1 à 7, caractérisé en ce que :
- on dessine les différentes pièces de la structure mécanosoudée à l'aide de moyens de Conception Assistée par Ordinateur, et on génère des programmes de découpe et de soudure ;
- on transfère les programmes de découpe et de soudure dans des ordinateurs de commande des installations de découpe et de soudage ;
- on effectue la découpe et le soudage de manière automatique, les installations de découpe et de soudage étant commandées par les ordinateurs de commande.

9. Structure mécanosoudée ayant la forme d'un polyèdre comportant des pièces en tôle métallique dont une partie au moins constitue des faces du polyèdre assemblées entre elles et soudées suivant des bords constituant des arêtes du polyèdre, caractérisée en ce qu'elle comporte des moyens complémentaires (4, 5, 6, 13, 18, 19, 20, 23, 24, 25, 26, 27, 28, 40, 41) sur des parties de raccordement des pièces (2, 3, 12, 14, 15, 16, 17, 21, 22, 42, 43), dans une disposition d'engagement mutuel, pour maintenir la structure assemblée avant le soudage desdits bords, les moyens d'emboîtement complémentaires étant réalisés par découpage sur les parties des pièces destinées à être assemblées entre elles deux à deux.

10. Structure mécanosoudée suivant la revendication 9, caractérisée en ce qu'elle comporte de plus au mois une entretoise (21, 22) en tôle métallique pouvant servir de raidisseur, intercalée entre au moins deux pièces et présentant des moyens d'emboîtement (23, 24, 25, 26, 27, 28) engagés dans des moyens d'emboîtement complémentaires (4, 5, 6, 13, 18, 19, 20) des deux pièces.

11. Noeud pour une structure métallique en treillis, caractérisée en ce qu'il est constitué par une structure mécanosoudée (1) ayant la forme d'un polyèdre, selon l'une quelconque des revendications 9 et 10.

## Claims

1. A manufacturing process for a welded structure (1) in a polyhedral shape, formed by parts (2, 3, 12, 14, 15, 16, 17, 21, 22, 42, 43), in metal sheeting, assembled together and one part of which at least forms the faces of the polyhedron welded along the edges (10, 11, 29, 30, 31, 32, 33, 34, 35, 36) and which are matched two by two, forming the edges of the polyhedron itself, which consists in cutting out the parts from at least one metal sheet and welding the parts together in the assembly position, characterised in that :
- when the parts are being cut out, matching fitting means (4, 5, 6, 13, 18, 19, 20, 23, 24, 25, 26, 27, 28, 40, 41) are made on the areas of the parts which are intended to be assembled together two by two,
- the parts are placed in an assembly position and the matching fitting means are fitted into one another, such as to form an assembly of a polyhedral shape which is held together by said fitting means, and
- the parts are welded together along the edges of the polyhedral assembly.

2. A manufacturing process according to Claim 1, characterised in that at least one part forming a brace (21, 22) is cut out from a metal sheet, this part comprising matching fitting means (23, 24, 25, 26, 27, 28) to the fitting means (4, 5, 6, 13, 18, 19, 20) of the parts of the structure and the brace is positioned between at least two part of the structure and the fitting means of the brace are positioned such that they engage the fitting means of the two parts, when the assembly is made in a polyhedral form.

3. A manufacturing process according to Claim 2, characterised in that no welding joint is made between the brace (21, 22) and the parts between which the brace is positioned.

4. A manufacturing process according to any one of Claims 1, 2 and 3, characterised in that the fitting means (4, 5, 6, 13, 18, 19, 20, 23, 24, 25, 26, 27, 28, 40, 41) are at least one of the following fitting means : tenons and mortises or notches.

5. A process according to one of Claims 1 to 4, characterised in that the metal sheet is cut in an inclined direction with respect to a perpendicular direction to the faces of the sheet, to obtain bevels on one part at least of the part edges (10, 11).

6. A process according to any one of Claims 1 to 5, characterised in that the parts are cut out by one of the following processes : laser beam cutting or water jet cutting.

7. A process according to any one of Claims 1 to 6, characterised in that the parts are welded by one of the following processes : laser beam welding or electron beam welding.

8. A process according to any one of Claims 1 to 7, characterised in that :
- the different parts of the welded structure are designed using Computer Assisted Design means, from which cutting and welding programmes are generated;
- the cutting and welding programmes are transferred into the control computers of the cutting and welding facilities;
- cutting and welding is carried out automatically, the cutting and welding facilities being controlled by control computers.

9. A welded structure of a polyhedral shape comprising parts of metal sheeting one part of which at least form the faces of the polyhedron assembled together and welded along edges forming the edges of the polyhedron itself, characterised in that it comprises matching fitting means (4, 5, 6, 13, 18, 19, 29, 23, 24, 25, 26, 27, 28, 40, 41) on the joining areas of the parts (2, 3, 12, 14, 15, 16, 17, 21, 22, 42, 43), to hold the assembled structure before welding of said edges, the matching fitting means being made by cut outs on the areas of the parts intended to be fitted together two by two.

10. A welded structure according to Claim 9, characterised in that in addition it comprises at least one brace (21, 22) made of sheet metal and able to act as a rigidifier, positioned between at least two parts and having fitting means (23, 24, 25, 26, 27, 28) engaged in the matching fitting means (4, 5, 6, 13, 18, 19, 20) the two parts.

11. A node for a metallic lattice-structure formed of a polyhedral welded structure (1) according to according to any one of Claims 9 and 10.

## Patentansprüche

1. Fertigungsverfahren für ein Schweißstruktur (1) in Polyederform, bestehend aus den Werkstücken (2, 3, 12, 14, 15, 16, 17, 21, 22, 42, 43), aus Metallblech, untereinander zusammengebaut, von denen mindestens ein Teil die Flächen des entlang der Ränder (10, 11, 29, 30, 31, 32, 33, 34, 35, 36) geschweißten Polyeders bildet, und die in Paaren komplementär angebracht werden, wodurch die Kanten des Polyeders entstehen, und bestehend im Ausschneiden der Teile aus mindestens einem Metallblech, welche Teile untereinander in Fügeposition zusammengeschweißt werden, gekennzeichnet dadurch, daß
- man während des Schneidens der Werkstücke ergänzende Verschachtelungsmittel (4, 5, 6, 13, 18, 19, 20, 23, 24, 25, 26, 27, 28, 40, 41) an den Teilen einarbeitet, die dazu bestimmt sind, gepaart untereinander zusammengefügt zu werden,
- man die Teile in eine Fügeposition stellt und die ergänzenden Verschachtelungsmittel in die Lage zum gegenseitigen Ineinandergreifen bringt, so daß man ein Gefüge mit Polyederform baut, das von besagten ergänzenden Mitteln zusammengehalten wird und
- man die Teile untereinander entlang der Fügekanten mit Polyederform zusammenschweißt.

2. Fertigungsverfahren gemäß dem Anspruch 1, gekennzeichnet dadurch, daß man durch Ausschneiden eines Metallbleches ein Teil bildet, der mindestens einen Abstandhalter (21, 22) mit ergänzenden Verschachtelungsmitteln (23, 24, 25, 26, 27, 28) für die Verschachtelungsmittel (4, 5, 6, 13, 18, 19, 29) der Teile der Struktur enthält und indem man den Abstandhalter zwischen mindestens zwei Strukturteile plaziert und die Verschachtelungsmittel des Abstandhalters in die Lage zum Eingreifen in die Verschachtelungsmittel der beiden Teile bringt, wenn man das Gefüge mit Polyederform bildet.

3. Fertigungsverfahren gemäß dem Anspruch 2, gekennzeichnet durch die Tatsache, daß man keine Schweißverbindung zwischen dem Abstandhalter (21, 22) und den Werkstücken bildet, zwischen welche der Abstandhalter plaziert wird.

4. Verfahren gemäß einem beliebigen der Ansprüche 1, 2 und 3, gekennzeichnet dadurch, daß die Verschachtelungsmittel (4, 5, 6, 13, 18, 19, 20, 23, 24, 25, 26, 27, 28, 40, 41) mindestens einem der nachstehenden Verschachtelungsmitteltypen angehören: Zapfen und Zapflöcher, Scharten.

5. Verfahren gemäß einem der Ansprüche 1 bis 4, gekennzeichnet dadurch, daß man das Metallblech in eine Richtung ausschneidet, die bezogen auf eine senkrechte Richtung zu den Blechflächen geneigt ist, so daß man entlang mindestens eines Teils der Ränder (10, 11) der Teile geneigte Fasen erzielt.

6. Verfahren gemäß einem beliebigen der Ansprüche 1 bis 5, gekennzeichnet dadurch, daß die Werkstücke anhand eines der folgenden Verfahren ausgeschnitten werden: Laserschneiden, Hochdruckwasserstrahlschneiden.

7. Verfahren gemäß einem beliebigen der Ansprüche 1 bis 6, gekennzeichnet dadurch, daß die Werkstücke anhand eines der folgenden Verfahren geschweißt werden: Laserschweißen, Elektronenstrahlschweißen.

8. Verfahren gemäß einem beliebigen der Ansprüche 1 bis 7, gekennzeichnet dadurch, daß:
- man die verschiedenen Teile der Schweißstruktur anhand von rechnergestützten Konzeptionsmitteln zeichnet und Schneid- und Schweißprogramme erzeugt;
- man die Schneid- und Schweißprogramme auf die Rechner überträgt, die die Schneid- und Schweißanlagen steuern;
- man das Schneiden und Schweißen automatisch durchführt, wobei die Schneid- und Schweißanlagen von den Rechnern gesteuert werden.

9. Schweißstruktur in Form eines Polyeders mit Metallblechteilen, von denen mindestens ein Teil die Flächen des Polyeders bildet, die untereinander entlang der Ränder gefügt und geschweißt werden, die die Kanten des Polyeders bilden, gekennzeichnet dadurch, daß sie ergänzende Mittel (4, 5, 6, 13, 18, 19, 20, 23, 24, 25, 26, 27, 28, 40, 41) an den Anschlußteilen der Teile (2, 3, 12, 14, 15, 16, 17, 21, 22, 42, 43) in einer Stellung zum gegenseitigen Ineinandergreifen aufweist, um die gefügte Struktur vor dem Schweißen besagter Ränder zusammenzuhalten, und wobei die ergänzenden Verschachtelungsmittel durch Ausschneiden an den Teilen der Werkstücke, die gepaart untereinander zusammengefügt werden sollen, hergestellt werden.

10. Schweißstruktur gemäß dem Anspruch 9, gekennzeichnet dadurch, daß sie außerdem mindestens einen Abstandhalter (21, 22) aus Metallblech enthält, der als Versteifer dienen kann, und der zwischen mindestens zwei Teile eingefügt wird und selbst über Verschachtelungsmittel (23, 24, 25, 26, 27, 28) verfügt, die in die ergänzenden Verschachtelungsmittel (4, 5, 6, 13, 18, 19, 20) der beiden Teile eingefügt werden.

11. Knotenpunkt für einen Metallaufbau aus Gitterstruktur, gekennzeichnet dadurch, daß der Knotenpunkt aus einer Schweißstruktur (1) in Form eines Polyeders besteht, gemäß einem beliebigen der Ansprüche 9 und 10.
